# FASCICULE DE BREVET EUROPEEN

(11) **EP 0 519 787 B1**
(45) Date de publication et mention de la délivrance du brevet: **06.09.1995**
(21) Numéro de dépôt: 92401604.1
(22) Date de dépôt: 10.06.1992
(51) Int. Cl.: B29C 70/18, B29C 65/58, F16L 59/02

(54) **Procédé pour la fabrication d'une gaine de protection, et gaine obtenue**
Schutzhülle und Verfahren zu ihrer Herstellung
Protective cover and method for manufacturing same

(30) Priorité: 19.06.1991 FR 9107544
(43) Date de publication de la demande: 23.12.1992
(73) Titulaire: AEROSPATIALE Société Nationale Industrielle, 75781 Paris Cédex 16 (FR)
(72) Inventeur: Bretagne, Joel, F-44600 Saint Nazaire (FR)
(74) Mandataire: Bonnetat, Christian

(56) Documents cités:
- DE-C- 3 810 356
- GB-A- 2 186 338

## Description

La présente invention concerne un procédé pour la fabrication d'une gaine de protection réalisée en une matière stratifiée à base de fibres imprégnées de résine, ainsi que la gaine obtenue à partir de la mise en oeuvre dudit procédé.

Plus particulièrement, quoique non exclusivement, la gaine de protection est destinée, dans son application préférentielle, aux conduites fluidiques, telles que par exemple les conduites de conditionnement d'air à haute température. Toutefois, il est bien évident que la gaine réalisée selon l'invention pourrait être installée autour de tout autre type de conduites comme des canalisations hydrauliques ou pneumatiques, voire même des câbles électriques et/ou optiques, dès l'instant où une protection est jugée nécessaire.

On remarquera que, par le document GB-A-2 186 338, on connaît déjà une gaine d'isolation thermique pour tuyaux constituée de deux demi-gaines hémicylindriques clipsables l'une à l'autre le long de leurs bords longitudinaux, chaque demi-gaine étant constituée d'une coque extérieure de protection en matière plastique moulée ou extrudée et d'un revêtement intérieur isolant, solidaire de la coque correspondante.

Cependant, notamment dans l'application préférentielle mentionnée ci-dessus, la technique d'isolation thermique usuelle mise en oeuvre consiste, tout d'abord, à entourer les conduites avec un manchon réalisé le plus souvent en un matelas de laine de verre et assurant l'isolation thermique de la conduite. Puis, le manchon est entouré par une gaine réalisée en un matériau stratifié pour assurer la protection de la conduite vis-à-vis de l'extérieur et pour éviter que, dans le cas d'une fuite dans la conduite, le fluide circulant à des températures élevées ne s'évacue vers l'extérieur. Cette gaine est alors généralement réalisée à partir de fibres de verre ou synthétiques imprégnées de résine appropriée. Aussi, pour améliorer les caractéristiques de ces gaines de protection, notamment leur rigidité, on utilise de plus en plus des fibres de carbone.

La fabrication de telles gaines connues est effectuée au moyen d'un mandrin de drapage cylindrique, dont la configuration géométrique extérieure, par exemple rectiligne, coudée ou courbée, correspond à celle de la gaine à obtenir, c'est-à-dire à la conduite à revêtir en tenant compte, dans l'application précitée, du manchon isolant. Pour cela, on met en place, autour du mandrin, une nappe de matière stratifiée (fibres-résine) dont l'un des bords longitudinaux, parallèle au mandrin, vient recouvrir l'autre bord longitudinal, de sorte que les deux bords se chevauchent l'un sur l'autre sur un arc angulaire donné. On presse ensuite la nappe ainsi enroulée contre la surface latérale du mandrin, puis on durcit ladite nappe par polymérisation pour obtenir la gaine de protection. On la retire ensuite du mandrin et on la dispose autour de la conduite à protéger, revêtue du manchon isolant, en écartant, grâce à son élasticité intrinsèque, les deux bords longitudinaux jusqu'au passage de la gaine autour du manchon, les bords longitudinaux reprenant spontanément leur position initiale, en se chevauchant l'un sur l'autre.

Si le retrait des gaines de protection desdits mandrins et, a fortiori, leur montage autour desdites conduites s'effectuent sans difficulté, lorsque les conduites à protéger présentent une configuration géométrique extérieure rectiligne ou légèrement courbée, en revanche, lorsque lesdites conduites sont coudées ou présentent une configuration extérieure sinueuse, le retrait des gaines obtenues desdits mandrins s'avère délicat en raison de l'écartement nécessaire à exercer sur les bords longitudinaux, qui peut entraîner des déformations importantes des gaines et dépasser même leur limite élastique.

De plus, le retrait des gaines, réalisées à partir de fibres de carbone, est rendu encore plus difficile en raison de la rigidité plus importante desdites gaines, qui sont alors moins élastiques et donc plus fragiles. Par conséquent, le rebut des gaines au moment de leur retrait des mandrins est important et alors coûteux, puisque des craquelures, pouvant aller jusqu'à la cassure des gaines, apparaissent fréquemment.

Il ressort donc que la fabrication des gaines de protection réalisées en fibres, notamment de carbone, et de résine est en pratique délicate voire impossible, dès l'instant où la configuration géométrique extérieure des conduites est complexe.

Par ailleurs, la localisation d'une éventuelle fuite de fluide, pouvant apparaître dans la conduite, est difficilement détectable puisque l'étanchéité de la gaine de protection, réalisée par le contact élastique des deux bords longitudinaux, est médiocre. En effet, dans ce cas, le fluide traverse le manchon isolant et se répand tout autour de la gaine de protection en s'évacuant par les bords longitudinaux.

En outre, dans cette application spécifique pour laquelle la conduite est entourée d'un manchon isolant en laine de verre, il arrive bien souvent que, lors du montage de la gaine de protection, les arêtes des bords longitudinaux détériorent le manchon.

La présente invention a pour but de remédier à ces inconvénients et concerne un procédé pour la fabrication d'une gaine de protection, grâce auquel son retrait dudit mandrin puis son montage ultérieur autour d'une conduite s'effectuent sans difficulté, et ce, indépendamment de la configuration géométrique de la conduite fluidique.

A cet effet, le procédé pour la fabrication d'une gaine de protection réalisée en une matière stratifiée à base de fibres imprégnées de résine, au moyen d'un mandrin de drapage cylindrique, est remarquable, selon l'invention, en ce qu'on prévoit, sur ledit mandrin, au moins deux éléments longitudinaux faisant saillie par rapport à sa périphérie et disposés sensiblement le long de deux génératrices diamétralement opposées l'une de l'autre, délimitant ledit mandrin en deux parties hémicylindriques longitudinales, et en ce que :
- on met en place, sur l'une desdites parties hémicylindriques du mandrin, une première nappe de matière stratifiée souple, dont les bords longitudinaux recouvrent lesdits éléments longitudinaux ;
- on met en place, sur l'autre partie hémicylindrique, une seconde nappe de matière stratifiée souple, dont les bords longitudinaux recouvrent ceux de la première nappe et lesdits éléments longitudinaux en saillie ;
- on applique, par différence de pression, les première et seconde nappes contre les surfaces externes des parties hémicylindriques ;
- on procède au durcissement des deux nappes qui définissent alors deux demi-coquilles hémicylindriques emboîtées l'une dans l'autre par leurs bords longitudinaux respectifs, ces derniers épousant le profil desdits éléments et formant des renflements longitudinaux externes ; et,
- on retire les deux demi-coquilles dudit mandrin.

Ainsi, on obtient par la mise en oeuvre du procédé une gaine de protection composée de deux demi-coquilles hémicylindriques en matière stratifiée, notamment à base de fibres de carbone, qui sont emboîtées, de façon amovible, l'une dans l'autre par leurs bords correspondants se chevauchant et formant les renflements longitudinaux, par l'intermédiaire des deux éléments prévus sur le mandrin de drapage.

On peut alors fabriquer des gaines de protection ayant des configurations géométriques complexes. En effet, le démontage de la gaine réalisée du mandrin de drapage, quelle que soit sa configuration correspondant à celle de la conduite, ne soulève pas de difficulté puisqu'on écarte alors légèrement les bords longitudinaux de la demi-coquille externe, issue de la seconde nappe, pour désemboîter les renflements longitudinaux de ceux de la demi-coquille interne, issue de la première nappe. Puis, sa mise en place autour de la conduite à protéger, revêtue éventuellement d'un manchon isolant, s'effectue aisément en disposant respectivement les deux demi-coquilles de part et d'autre de la conduite, puis en les rapprochant l'une vers l'autre jusqu'à ce que leurs bords longitudinaux se chevauchent puis s'emboîtent, grâce aux renflements.

L'assemblage des demi-coquilles par emboîtement garantit ainsi un montage fiable et rapide de la gaine, ainsi qu'une bonne étanchéité tout le long de la conduite.

Par conséquent, le procédé de l'invention permet, outre la réalisation de gaines ayant des configurations géométriques variées, d'éviter le rebut desdites gaines, d'utiliser les fibres de carbone imprégnées de résine comme matériau stratifié et donc, d'améliorer la rigidité des gaines, d'obtenir une bonne étanchéité entre les deux demi-coquilles favorisant la détection d'éventuelles fuites dans la conduite, et d'éviter la détérioration du manchon isolant.

De préférence, on rapporte lesdits éléments longitudinaux à la périphérie dudit mandrin de drapage, le long des deux génératrices. On peut alors effectuer la solidarisation desdits éléments longitudinaux rapportés sur le mandrin par soudage.

Dans un mode préféré de réalisation, on réalise lesdits éléments longitudinaux sous la forme de tiges, dont la section transversale es: par exemple circulaire. Ainsi, on peut équiper aisément les mandrins de drapage existant en y rapportant les tiges. Par ailleurs, comme leur section est circulaire, les renflements longitudinaux des bords qui se chevauchent présentent une forme de oméga (Ω), garantissant un emboîtement fiable et une étanchéité efficace des demi-coquilles formant la gaine.

Dans une autre réalisation, les éléments longitudinaux peuvent faire partie intégrante dudit mandrin, lors de sa fabrication.

Avantageusement, on dispose des feuillards entre les bords correspondants, qui se chevauchent et qui forment lesdits renflements, desdites nappes. Cela permet ainsi d'éviter les risques de solidarisation des bords correspondants des nappes lors de leur polymérisation.

Par ailleurs, on applique de préférence les première et seconde nappes contre la surface externe dudit mandrin par dépression, sous l'action d'une source fluidique raccordée à un passage axial prévu dans ledit mandrin et débouchant, par des passages radiaux, de la surface externe dudit mandrin.

Pour assurer un emboîtement efficace des demi-coquilles hémicylindriques, on superpose lesdits bords longitudinaux des nappes, recouvrant respectivement lesdits éléments longitudinaux, sur un arc angulaire compris au moins entre 15° et 20°.

Les figures du dessin annexé feront bien comprendre comment l'invention peut être réalisée. Sur ces figures, des références identiques désignent des éléments semblables.

La figure 1 est une coupe transversale d'une gaine de protection obtenue au moyen d'un mandrin de drapage, après la mise en oeuvre du procédé conforme à l'invention.

La figure 2 représente, à une échelle agrandie, l'emboîtement des deux demi-coquilles de la gaine.

Les figures 3A et 3B montrent schématiquement et en coupe transversale la mise en place de la gaine de protection obtenue autour d'une conduite fluidique de conditionnement d'air entourée, dans ce cas, d'un manchon isolant.

La figure 4 représente schématiquement en plan un exemple de conduite de conditionnement d'air, composée de tronçons respectivement rectiligne et coudé, raccordés entre eux et entourés de gaines de protection respectives.

La figure 5 est une coupe de ladite conduite selon la ligne V-V de la figure 4.

Le procédé est destiné à la fabrication, à partir d'un mandrin de drapage cylindrique 1, d'une gaine de protection 2 réalisée en une matière stratifiée à base de fibres imprégnées de résine, et entourant par la suite une conduite fluidique ou analogue. Comme il est décrit auparavant, le mandrin de drapage 1 présente une configuration géométrique extérieure correspondant à celle de la conduite à revêtir, en tenant compte éventuellement d'un manchon isolant entourant préalablement ladite conduite.

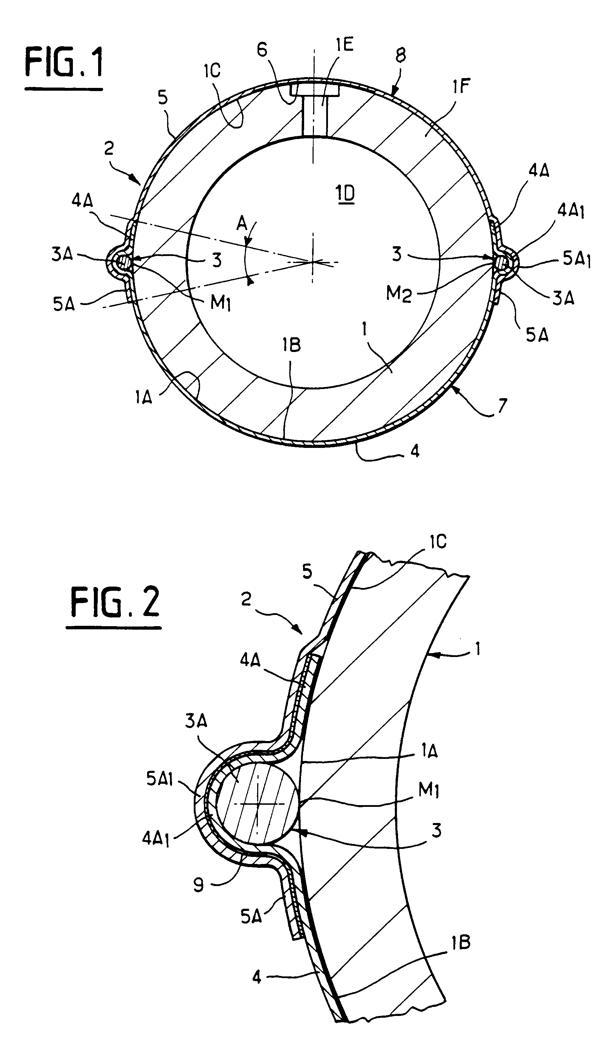

Selon l'invention et comme le montre la figure 1, le procédé consiste tout d'abord à prévoir avantageusement, sur le mandrin de drapage cylindrique 1, deux éléments longitudinaux 3 qui font saillie par rapport à la surface externe 1A du mandrin et qui sont disposés sensiblement le long de deux génératrices M₁ et M₂ diamétralement opposées l'une de l'autre de ladite surface externe. Ainsi, ces deux éléments longitudinaux 3 divisent la surface externe du mandrin de drapage en deux parties hémicylindriques 1B et 1C, identiques. Dans un mode préféré de réalisation, ces deux éléments longitudinaux 3 sont constitués par des tiges 3A de section circulaire, rapportées par exemple par soudage ou par tout autre moyen de fixation approprié le long des génératrices M₁ et M₂ dudit mandrin. Celui-ci est creux et il présente par conséquent un passage axial 1D. La section du mandrin de drapage 1 est, à ce niveau de la coupe, en forme de couronne mais elle pourrait être de tout autre forme et évoluer longitudinalement, en fonction de la configuration géométrique extérieure de la conduite à revêtir.

Le procédé selon l'invention consiste ensuite à mettre en place autour de ce mandrin 1, pourvu des deux tiges longitudinales 3A diamétralement opposées, des première et seconde nappes de matière stratifiée souple, respectivement 4 et 5.

Ainsi, on dispose sur la partie hémicylindrique 1B du mandrin 1, la première nappe 4 de façon que ses bords longitudinaux 4A recouvrent les deux tiges 3A. On dispose après sur l'autre partie hémicylindrique 1C dudit mandrin 1, la seconde nappe 5 de façon que ses bords longitudinaux 5A recouvrent les bords 4A de la première nappe et les tiges longitudinales 3A. Pour cela, la largeur de ces nappes est déterminée préalablement pour que leurs bords longitudinaux recouvrent totalement les tiges en débordant respectivement de ces dernières. On voit sur la figure 1 que les bords correspondants 4A et 5A des nappes se chevauchent l'un sur l'autre sur un arc angulaire A de l'ordre de 15° à 20°. Puis, on presse les nappes de matière stratifiée souple 4 et 5, ainsi disposées, contre les parties hémicylindriques 1B et 1C définissant la surface externe 1A dudit mandrin. Pour cela, on crée une dépression, par l'intermédiaire à une source fluidique non représentée sur la figure 1 mais connue en soi, dans le passage axial 1D du mandrin, qui permet, grâce à des passages radiaux 1E pratiqués dans la paroi 1F du mandrin et reliant le passage axial 1D à la surface externe 1A du mandrin, d'appliquer fermement les nappes 4 et 5 contre la surface externe dudit mandrin. Aussi, comme le montre la figure 1, on prévoit des plaques rigides et poreuses 6 autour des passages 1E et contre la surface externe du mandrin pour éviter que la nappe de matière stratifiée, dans ce cas la nappe 5, soit localement aspirée et déformée.

On procède ensuite au durcissement des nappes 4 et 5, ainsi pressées contre le mandrin 1, par polymérisation. Après le durcissement des nappes et l'arrêt de la source fluidique, ces nappes 4 et 5 définissent deux demi-coquilles hémicylindriques respectivement 7 et 8 emboîtées l'une dans l'autre par leurs bords longitudinaux respectifs 4A et 5A, qui se chevauchent et qui épousent le profil externe des tiges longitudinales 3A solidaires du mandrin. Grâce à ces tiges, les bords longitudinaux externes 4A et 5A desdites demi-coquilles 7 et 8 forment au niveau des tiges des renflements longitudinaux externes conjugués 4A₁ et 5A₁, dont le profil présente une forme de oméga (Ω), comme le montrent les figures 1 et 2.

On retire ensuite les deux-coquilles 7 et 8, qui forment alors la gaine de protection 1, dudit mandrin 1. Pour cela, on écarte, dans cet exemple de réalisation, les bords longitudinaux 5A de la demi-coquille hémicylindrique 8 des bords longitudinaux 4A de l'autre demi-coquille hémicylindrique 7, de façon que les renflements 5A₁ des bords 5A soient dégagés des renflements 4A₁ des bords 4A. Puis, on procède, de façon analogue, au retrait de la demi-coquille 7 du mandrin de drapage 1. Bien évidemment, l'écartement nécessaire pour désengager la demi-coquille 8 de la demi-coquille 7, puis cette dernière du mandrin 1, s'effectue dans le domaine d'élasticité intrinsèque à la matière constituant les deux demi-coquilles 7 et 8, c'est-à-dire les nappes 4 et 5.

Grâce à cette faculté de démontage et de montage par déboîtement/emboîtement desdites demi-coquilles, faculté obtenue par le procédé de l'invention, on peut réaliser des gaines de protection ayant des configurations géométriques complexes. De plus, ces gaines peuvent être avantageusement réalisées en une matière stratifiée comportant des fibres de carbone, qui permet notamment d'améliorer la rigidité de la gaine obtenue, sans se heurter aux problèmes évoqués préalablement.

Par ailleurs, comme le montre la figure 2, on peut agencer entre les bords 4A et 5A desdites nappes, qui se chevauchent, un feuillard 9 constitué d'une bande mince métallique. Cet agencement de feuillards 9 entre les bords superposés des nappes évite, lors de l'opération de durcissement, le risque de collage desdites nappes à ce niveau.

Alors que, dans l'exemple décrit, les éléments longitudinaux 3 sont rapportés au mandrin de drapage 1, ce qui permet d'équiper à moindre coût les mandrins existants desdites tiges, ces éléments pourraient être intégrés au mandrin lors de sa fabrication.

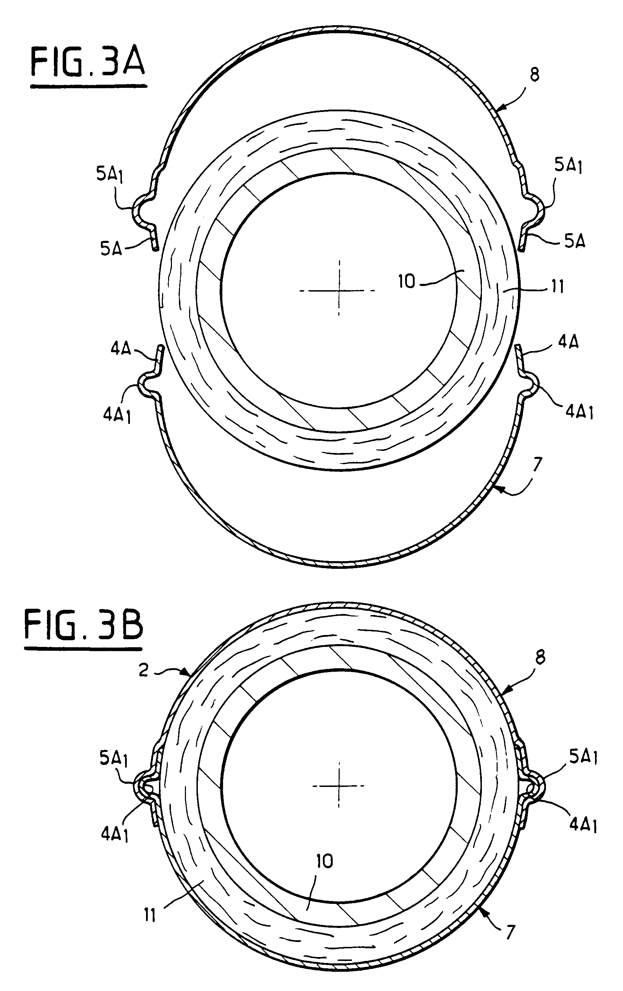

Comme le montrent les figures 3A et 3B, les gaines de protection 2, obtenues par la mise en oeuvre du procédé conformément à l'invention, sont par exemple destinées aux conduites de conditionnement d'air à haute température équipant notamment les aéronefs et dont une est représentée schématiquement en coupe sur ces figures sous la référence numérique 10. La gaine de protection 2 a pour objet de protéger la conduite 10 vis-à-vis de chocs extérieurs et d'éviter que l'air circulant dans la conduite ne s'évacue vers l'extérieur lors de fuites pouvant apparaître dans la conduite. Ainsi, ces gaines de protection forment-elles un écran de protection. En outre, on prévoit généralement un manchon isolant 11 réalisé en laine de verre autour de la conduite 10.

On voit sur la figure 3A que le montage de la gaine de protection s'effectue en disposant respectivement les deux demi-coquilles hémicylindriques 7 et 8 de part et d'autre dudit manchon isolant 11 entourant la conduite 10, puis en rapprochant les bords longitudinaux 4A et 5A les uns vers les autres, jusqu'à ce que les renflements correspondants 4A₁ et 5A₁ s'emboîtent. On remarque ainsi que l'assemblage par emboîtement des coquilles ne détériore pas le manchon isolant en laine de verre 11 et confère de plus à la gaine de protection 1 obtenue, montrée sur la figure 3B, une bonne étanchéité en raison de la section en oméga des renflements.

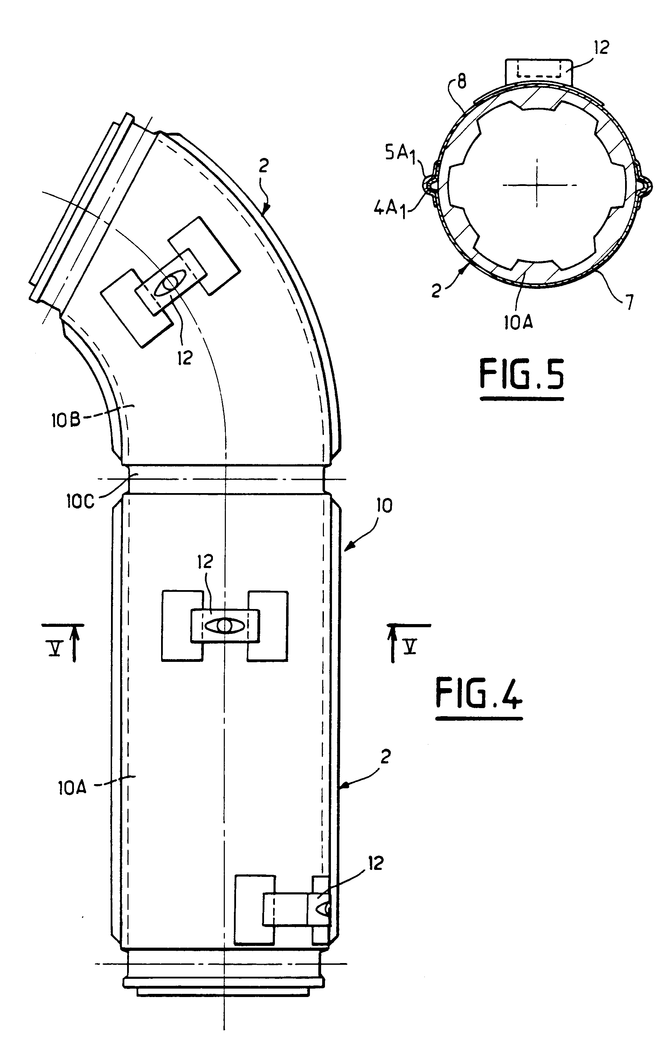

On a représenté partiellement sur les figures 4 et 5 une portion de conduite 10 de conditionnement d'air, se composant d'un tronçon rectiligne 10A et d'un tronçon coudé 10B, raccordés entre eux, de façon appropriée, en 10C. Autour desdits tronçons sont disposées les gaines de protection 2.

Pour détecter des éventuelles fuites d'air à travers la conduite, dont la température et la pression peuvent être élevées, des capteurs 12 appropriés destinés à relever les principaux paramètres physiques (pression, température, etc...) sont rapportés sur les gaines de protection 2. Comme l'étanchéité entre les deux demi-coquilles des gaines est efficace, la fuite est rapidement détectée par les capteurs 12. De plus, les gaines 2 résistent alors efficacement puisqu'elles sont réalisées en fibres de carbone, ce qui permet d'attendre une intervention ultérieure sur le circuit d'air.

## Revendications

1. Procédé pour la fabrication d'une gaine de protection réalisée en une matière stratifiée à base de fibres imprégnées de résine, au moyen d'un mandrin de drapage cylindrique,
caractérisé en ce qu'on prévoit, sur ledit mandrin (1), au moins deux éléments longitudinaux (3) faisant saillie par rapport à sa périphérie (1A) et disposés sensiblement le long de deux génératrices (M₁,M₂) diamétralement opposées l'une de l'autre, délimitant ledit mandrin en deux parties hémicylindriques longitudinales (1B,1C), et en ce que :
- on met en place, sur l'une desdites parties hémicylindriques du mandrin, une première nappe de matière stratifiée souple (4), dont les bords longitudinaux (4A) recouvrent lesdits éléments longitudinaux ;
- on met en place, sur l'autre partie hémicylindrique, une seconde nappe de matière stratifiée souple (5), dont les bords longitudinaux (5A) recouvrent ceux de la première nappe et lesdits éléments longitudinaux en saillie ;
- on applique, par différence de pression, les première et seconde nappes contre les surfaces externes des parties hémicylindriques (1B,1C) ;
- on procède au durcissement des deux nappes (4,5) qui définissent alors deux demi-coquilles hémicylindriques (7,8) emboîtées l'une dans l'autre par leurs bords longitudinaux respectifs, ces derniers (4A,5A) épousant le profil desdits éléments et formant des renflements longitudinaux externes (4A₁, 5A₁) ; et,
- on retire les deux demi-coquilles dudit mandrin.

2. Procédé selon la revendication 1,
caractérisé en ce qu'on rapporte lesdits éléments longitudinaux (3) à la périphérie dudit mandrin de drapage (1), le long des deux génératrices (M₁, M₂).

3. Procédé selon la revendication 2,
caractérisé en ce qu'on effectue la solidarisation desdits éléments longitudinaux (3) sur le mandrin par soudage.

4. Procédé selon l'une quelconque des revendications 1 à 3,
caractérisé en ce qu'on réalise lesdits éléments longitudinaux (3) sous la forme de tiges (3A).

5. Procédé selon la revendication 4,
caractérisé en ce que la section transversale desdites tiges (3A) est circulaire.

6. Procédé selon la revendication 1,
caractérisé en ce que lesdits éléments longitudinaux (3) font partie intégrante dudit mandrin.

7. Procédé selon l'une quelconque des revendications 1 à 6,
caractérisé en ce qu'on dispose des feuillards (9) entre les bords correspondants (4A,5A), qui se chevauchent et qui forment lesdits renflements longitudinaux (4A₁, 5A₁), desdites nappes (4,5).

8. Procédé selon l'une quelconque des revendications précédentes 1 à 7,
caractérisé en ce qu'on applique les première et seconde nappes (4,5) contre la surface externe dudit mandrin par dépression, sous l'action d'une source fluidique raccordée à un passage axial (1D) prévu dans ledit mandrin et débouchant, par des passages radiaux (1E), de la surface externe (1A) dudit mandrin.

9. Procédé selon l'une quelconque des revendications précédentes 1 à 8,
caractérisé en ce qu'on superpose lesdits bords longitudinaux des nappes, recouvrant respectivement lesdits éléments longitudinaux, sur un arc angulaire compris au moins entre 15° et 20°.

## Claims

1. A method of manufacturing a protective sheath made of laminated material based on fibers impregnated with resin, the method making use of a cylindrical draping mandrel and being characterized in that:
at least two longitudinal elements (3) are provided on said mandrel (1) to project from the periphery (1A) thereof, which elements are disposed substantially along diametrically opposite generator lines (M₁, M₂) of the mandrel, dividing said mandrel into two longitudinal semicylindrical portions (1B, 1C);
a first sheet of flexible laminated material (4) is placed on one of said semicylindrical portions of the mandrel, with the longitudinal margins (4A) of the sheet overlying said longitudinal elements;
a second sheet of flexible laminated material (5) is placed on the other semicylindrical portion, with the longitudinal margins (5A) thereof overlying the longitudinal margins of the first sheet and said projecting longitudinal elements;
the first and second sheets are pressed against the outside surfaces of the semicylindrical portions (1B, 1C) by means of a pressure difference;
both sheets (4, 5) are hardened, thereby defining two semicylindrical half-shells (7, 8) which are interfitted in each other along their respective longitudinal margins, which margins (4A 5A) fit over the profile of said elements and form external longitudinal swellings (4A₁, 5A₁); and
the two half-shells are removed from said mandrel.

2. A method according to claim 1, characterized in that said longitudinal elements (3) are applied to the periphery of said draping mandrel (1) along the two generator lines (M₁, M₂).

3. A method according to claim 2, characterized in that said longitudinal elements (3) are secured to the mandrel by welding.

4. A method according to any one of claims 1 to 3, characterized in that said longitudinal elements (3) are made in the form of rods (3A).

5. A method according to claim 4, characterized in that the rods (3A) are circular in cross-section.

6. A method according to claim 1, characterized in that the longitudinal elements (3) form integral portions of said mandrel.

7. A method according to any one of claims 1 to 6, characterized in that foils (9) are disposed between the corresponding margins (4A, 5A) that overlap and that form said longitudinal swellings (4A₁, 5A₁) of said sheets (4, 5).

8. A method according to any one of the preceding claims 1 to 7, characterized in that the first and second sheets (4, 5) are pressed against the outside surface of said mandrel by suction under drive from a fluid source connected to an axial passage (1D) provided in said mandrel and opening out via radial passages (1E) into the outside surface (1A) of said mandrel.

9. A method according to any one of the preceding claims 1 to 8, characterized in that said longitudinal margins of the sheets overlying said longitudinal elements are caused to overlap one another in pairs over respective angular arcs lying at least in the range 15° to 20°.

## Patentansprüche

1. Verfahren zur Herstellung eines Schutzmantels aus einem Schichtstoff auf der Grundlage harzgetränkter Fasern mit Hilfe eines zylindrischen Streckformdorns,
dadurch gekennzeichnet, daß am Dorn (1) mindestens zwei an dessen Umfang (1A) überstehende Längselemente (3) vorhanden sind, die etwa an den beiden einander diametral entgegengesetzten Mantellinien (M₁,M₂) angeordnet werden, die den Dorn in zwei halbzylindrische Längsteile (1B,1C) teilen, und dadurch, daß:
- an einem der halbzylindrischen Teile des Dorns eine erste Matte aus flexiblem Schichtstoff (4) angeordnet wird, deren Längsränder (4A) die Längselemente überdecken;
- am anderen halbzylindrischen Teil eine zweite Matte aus flexiblem Schichtstoff (5) angeordnet wird, deren Längsränder (5A) die der ersten Matte und die überstehenden Längselemente überdecken;
- durch Druckunterschied die erste und zweite Matte an die Außenflächen der halbzylindrischen Teile (1B,1C) angedrückt werden;
- die beiden Matten (4,5) gehärtet werden, die dann zwei halbzylindrische Schalenhälften (7,8) bilden, die mit ihren entsprechenden Längsrändern ineinandergreifen, wobei diese (4A,5A) das Profil der Elemente annehmen und äußere Längswülste (4A₁, 5A₁) bilden; und
- die beiden Schalenhälften vom Dorn abgenommen werden.

2. Verfahren nach Anspruch 1,
dadurch gekennzeichnet, daß die Längselemente (3) am Umfang des Streckformdorns (1) an den beiden Mantellinien (M₁, M₂) angebracht werden.

3. Verfahren nach Anspruch 2,
dadurch gekennzeichnet, daß die Verbindung der Längselemente (3) am Dorn durch Schweißen erfolgt.

4. Verfahren nach einem der Ansprüche 1 bis 3,
dadurch gekennzeichnet, daß die Längselemente (3) in Form von Stangen (3A) verwirklicht werden.

5. Verfahren nach Anspruch 4,
dadurch gekennzeichnet, daß der Querschnitt der Stangen (3A) kreisrund ist.

6. Verfahren nach Anspruch 1,
dadurch gekennzeichnet, daß die Längselemente (3) Bestandteil des Dorns sind.

7. Verfahren nach einem der Ansprüche 1 bis 6,
dadurch gekennzeichnet, daß zwischen den sich überlappenden entsprechenden Rändern (4A,5A), die die Längswülste (4A₁,5A₁) der Matten (4,5) bilden, Bandstahl (9) angeordnet wird.

8. Verfahren nach einem der obigen Ansprüche 1 bis 7,
dadurch gekennzeichnet, daß die erste und zweite Matte (4,5) durch Unterdruck, der von einer Fluidquelle erzeugt wird, die an eine axiale Durchführung (1D) im Dorn angeschlossen ist, die durch radiale Durchführungen (1E) mit der Außenfläche (1A) des Dorns verbunden ist, an die Außenfläche des Dorns angelegt wird.

9. Verfahren nach einem der obigen Ansprüche 1 bis 8,
dadurch gekennzeichnet, daß die Längsränder der Matten, die jeweils die Längselemente bedecken, über einen Winkelbogen von mindestens 15° bis 20° übereinanderliegen.
